# EUROPÄISCHE PATENTSCHRIFT

(11) **EP 2 676 933 B1**
(45) Veröffentlichungstag und Bekanntmachung des Hinweises auf die Patenterteilung: **03.12.2014**
(21) Anmeldenummer: 12004615.6
(22) Anmeldetag: 20.06.2012
(51) Int. Cl.: C01F 7/06, C01F 7/47, C22B 3/04, C22B 3/22, C22B 3/44, C22B 21/00

(54) **Verfahren zur kalten hydrochemischen Zersetzung von Natriumhydrogenalumosilikat**
Method for cold hydrochemical decomposition of sodium hydrogen aluminosilicate
Procédé de décomposition hydrochimique à froid d'aluminosilicate de sodium et d'hydrogène

(43) Veröffentlichungstag der Anmeldung: 25.12.2013
(73) Patentinhaber: Pleason Ventures LTD, Limassol (CY)
(72) Erfinder: Welter, Alexander, 30177 Hannover (DE)
(74) Vertreter: von Füner, Nicolai

(56) Entgegenhaltungen:
- WO-A1-97/29992
- US-A- 3 442 795

## Beschreibung

Die Erfindung betrifft die NE-Metallurgie, insbesondere das Gebiet der Herstellung von Tonerde nach dem alkalischen hydrochemischen Verfahren.

Das alkalische hydrochemische Verfahren zur Verarbeitung von Alumosilikaterzen zu Tonerde kommt besonders für siliciumarme Bauxite in Frage, während es für andere Alumosilikaterze (siliciumreiche Bauxite) nur beschränkt in Frage kommt oder nicht anwendbar ist (bei Tonen, bauxitähnlichen Gesteinen oder Sillimaniten), und zwar aufgrund der hohen Verluste an nutzbringenden Komponenten wie Natrium- und Aluminiumoxid mit Natriumhydrogenalumosilikat (s. Spravoc̃nik metallurga po cvetnym metallam. Proizvodstvo glinozema, M., Metallurgija, 1970, S. 141).

Bei der Herstellung von Tonerde nach dem alkalischen hydrochemischen Verfahren verbindet sich das in dem zu verarbeitenden Erz enthaltene Siliciumdioxid zum in alkalischen Medien unlöslichem Natriumhydrogenalumosilikat Na₂Al₂Si₂O₈2H₂O. Die Bildung des Natriumhydrogenalumosilikats verursacht Verluste an den verwertbaren Komponenten, d.h. des Natrium- und Aluminiumoxids im auf Halde liegenden Rotschlamm bei der Verarbeitung von hochwertigen Bauxiten. Bei der Verarbeitung von minderwertigen Bauxiten mit hohem Gehalt an Siliciumdioxid sind die Verluste an verwertbaren Komponenten im Rotschlamm so hoch, dass man diesen durch Sintern weiterverarbeiten muss.

Bekannt ist die aufeinanderfolgende Variante der Verarbeitung von siliciumreichen Bauxiten nach dem Sinterverfahren von Bayer (s. A.I. Lajner, Proizvodstvo glinozema, M., Metallurgija, 1961, S. 575). Gemäß diesem Verfahren wird Rotschlamm mit hohem Gehalt an Al₂O₃ und Na₂O in einem Gemisch aus Kalkstein und Soda gesintert. Die infolge der Auslaugung des Sinterkuchens von Silicium abgetrennte Aluminatlauge wird dabei mit der Aluminatlauge des Bayer-Verfahrens zwecks gemeinsamer Zersetzung gemischt. Die Nachteile dieses Verfahrens sind die hohen Kapitalinvestitionen, der hohe Brennstoffverbrauch und die erheblichen umweltbelastenden Emissionen, wobei die Zusammensetzung des Rotschlamms das Sintern des vorbereiteten Beschickungsgutes erschwert.

Bekannt ist ein alkalisches Verfahren zur Herstellung von Tonerde aus Ton durch Sintern (ibid. SS. 142 - 143). Das Wesen des Verfahrens besteht im Sintern des aus Ton, Kalkstein und kalzinierter Soda bestehenden Beschickungsgutes, wobei bei hoher Temperatur aus dem im Beschickungsgut enthaltenen Aluminiumoxid festes Natriumaluminat gebildet wird, in seiner Überführung in Lösung und in der nachfolgenden Abscheidung von Aluminiumhydroxid aus dieser Lösung, wobei sich das Siliciumdioxid beim Sintern zum in alkalischen Lösungen unlöslichen Dicalciumsilikat verbindet. Dieses Verfahren hat aufgrund seines hohen Aufwandes an Material, Energie und Brennstoff sowie aufgrund des hohen Kapitalaufwands und der erheblichen umweltbelastenden Emissionen seine technische Bedeutung eingebüßt.

Bekannt ist ferner ein alkalisch-saures Verfahren zur Herstellung von Tonerde aus siliciumreichen Aluminiumerzen (s. RF-PS Nr. 2440296, Kl. C01F7/20, veröffentlicht 2012). Nach diesem Verfahren wird der Ausgangsstoff unter Bildung von Alkalimetallhydrogenalumosilikaten ausgelaugt, die man durch Behandlung des Schlamms mit der schwachen Lösung einer starken Säure bei niedrigen Temperaturen zersetzt, wobei das Aluminium und die Alkalimetalle in Lösung gehen. Aus dieser Lösung wird dann Aluminiumhydroxid abgetrennt. Der Hauptnachteil des alkalisch-sauren Verfahrens besteht in der komplizierten Rückgewinnung der starken Säuren.

Aufgabe der vorliegenden Erfindung ist die Entwicklung eines Verfahrens zur hydrochemischen Zersetzung von Natriumhydrogenalumosilikat zur Verminderung der Verluste an wertvollen Komponenten bei der Verarbeitung von Bauxiten zu Tonerde sowie die Erzeugung von Tonerde aus anderen Alumosilikatgesteinen.

Die gestellte Aufgabe wird wie folgt gelöst:
Kristallines Natriumhydrogenalumosilikat zersetzt man bei niedriger Temperatur mit Hilfe eines umlaufenden Chelats, und zwar mit der wässrigen Lösung eines Gemisches aus dem Natriumsalz der Ethylendiaminessigsäure und einer schwachen Säure. Durch die Zersetzung der Natriumhydrogenalumosilikats entstehen die löslichen Verbindungen des Aluminiumchelats, der Kieselsäure und des Natriumsalzes der schwachen Säure:

   Na₂Al₂ASil₂O₈·2H₂O + 2NaₓH₍₄₋ₓ₎edta + 2x/y H_{y}A→ →2Na[Aledta] + 2H₄SiO₄ + 2x/y Na_{y}A + 2H₂O [1]

   worin A das Anion einer schwachen Säure ist,
x der Grad der Substitution der Wasserstoffatome der Carboxylgruppe der Ethylendiamintetraessigsäure durch die Natriumatome ist, und 1, 2, 3, oder 4 bedeutet,
y die Basizität der schwachen Säure ist und 1 oder 2 bedeutet.

Der erhaltenen Lösung wird dann ein Koagulierungsmittel zugesetzt, wonach man zur Koagulierung der Kieselsäure erwärmt, das gebildete Kieselsäuregel von der Lösung abtrennt und die Lösung der Zersetzung des Aluminiumchelats durch Umsetzung mit überschüssigem Natriumhydrogencarbonat zuführt:

Na[Aldta] + 4NaHCO₃ = NaA1[CO₃](OH)₂↓ + Na₄edta + 3CO₂ + H₂O [2]

Durch die Zersetzung des Aluminiumchelats bilden sich ein Niederschlag aus Natriumhydrogencarboaluminat und die Mutterlauge des Chelats. Der Niederschlag des Natriumhydrogencarboaluminats wird dann von der Mutterlauge abgetrennt. Diese wird anschließend eingedampft, abgekühlt und durch Karbonisierung unter Druck mit gasförmigem Kohlendioxid regeneriert, und das auskristallisierte Natriumhydrogencarbonat von der Lösung abgetrennt.

Na₄edta + (4-x)CO₂ + (4-x)H₂O → NaₓH₍₄₋ₓ₎edta + (4-x)NaHCO₃↓ [3]

NayA + yCO₂ + yH₂O = H_{y}A + yNaHCO₃↓ [4]

Die Regenerationsprodukte, d.h. die Lösung des Chelats und der schwachen Säure sowie das Natriumhydrogencarbonat sind Umlaufprodukte.

Das Natriumhydrogencarboaluminat wird dann unter Bildung von Natriumaluminat geglüht: t

NaAl[XO₃](OH)₂ → NaAlO₂ + H₂O↑ + CO₂↑ [5]

Das Natriumaluminat wird in der Aluminatlösung gelöst und dann wieder der Herstellung von Tonerde nach dem Bayer-Verfahren zugeführt.

Beispiele für die Ausführung der Erfindung erläutern die folgenden Schemata:
- Fig. 1: Rotschlammverarbeitung;
- Fig. 2: Alkalische hydrochemische Verarbeitung von Ton zu Tonerde, die schwache Säure ist Kohlensäure;
- Fig. 3: hydrochemische alkalische Verarbeitung von Ton zu Tonerde, die schwache Säure ist Essigsäure.

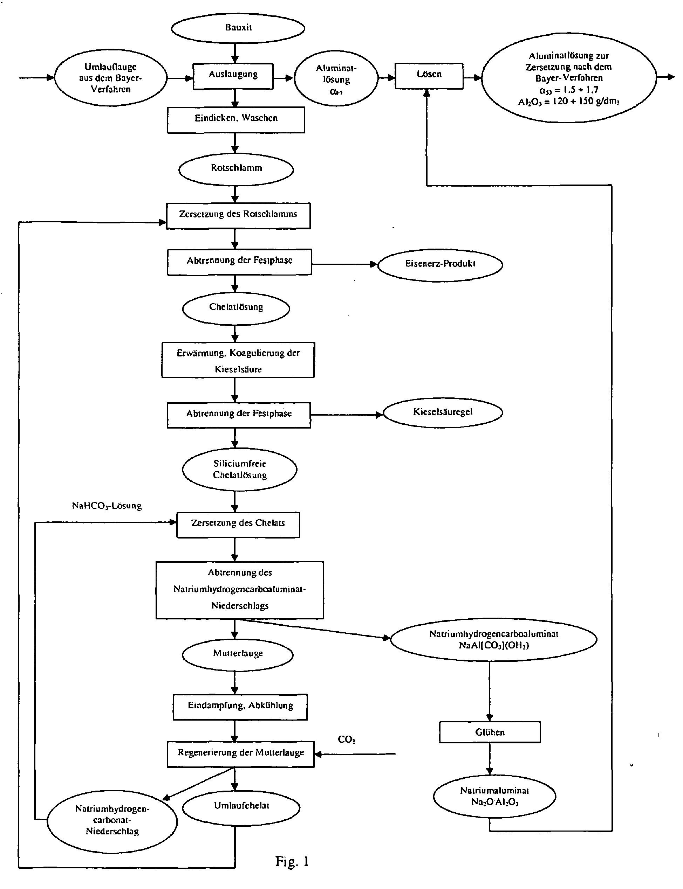

### Beispiel 1 - Rotschlammverarbeitung (s. Fig. 1).

Zusammensetzung der Festphase des Rotschlamms: Na₂O - 12,8 %, Al₂O₃ - 18,6 %, SiO₂ - 19,2 %, Fe₂O₃ - 33,9 %, TiO₂ - 4,3 %.

Die Zersetzung der Festphase des Rotschlamms erfolgte unter folgenden Bedingungen:
- Umlaufende Chelatlösung:
- Konzentration des Dinatriumsalzes der Ethylendiamintetraessigsäure: 120 g/dm³ und Konzentration der Essigsäure: 7 %,
- Temperatur: 25 °C,
- Zersetzungsdauer: 3 Stunden,
- Verhältnis Flüssigphase : Festphase: 10 : 1.

Die Flüssigphase der Reaktionsprodukte wird vom unlöslichen Niederschlag abfiltriert. Zusammensetzung des Niederschlags (Eisenerzprodukt): Na₂O - 0,31 %, Al₂O₃ - 4,70 %, SiO₂ - 3,40 %, Fe₂O₃ - 75,3 %, TiO₂ - 7,3 %.

Die Extraktion aus der Festphase des Rotschlamms in die Flüssigphase betrug jeweils für Na₂O - 98,8 % und für Al₂O₃ - 89,0 %.

Die Flüssigphase hielt man dann bei einer Temperatur von 120 °C während 2 Stunden zur Koagulierung der Kieselsäure. Das entstandene Kieselsäuregel mit der Zusammensetzung: Na₂O - 1,5 %, Al₂O₃ - 1,4 % und SiO₂ - 77,9 % wurde abfiltriert und die siliciumfreie Lösung wurde dann bei 90 °C durch Umsetzung mit einer Natriumhydrogencarbonatlösung bei einem Überschuss von 30 %, bezogen auf die Stöchiometrie, zersetzt. Bei der Zersetzung fiel ein Niederschlag aus Natriumhydrogencarboaluminat bei folgender Zusammensetzung aus: Na₂O - 20,4 %, Al₂O₃ - 34,4 %, SiO₂ - 0,4 % und Fe₂O₃ - 0,03 %. Dieser Niederschlag wurde dann abfiltriert und bei einer Temperatur von 700 °C während 30 Minuten geglüht. Das gebildete Natriumaluminat hatte folgende Zusammensetzungen: Na₂O - 36,3 %, Al₂O₃ - 62,2 %, SiO₂ - 0,8 % und Fe₂O₃ - 0,1 %.

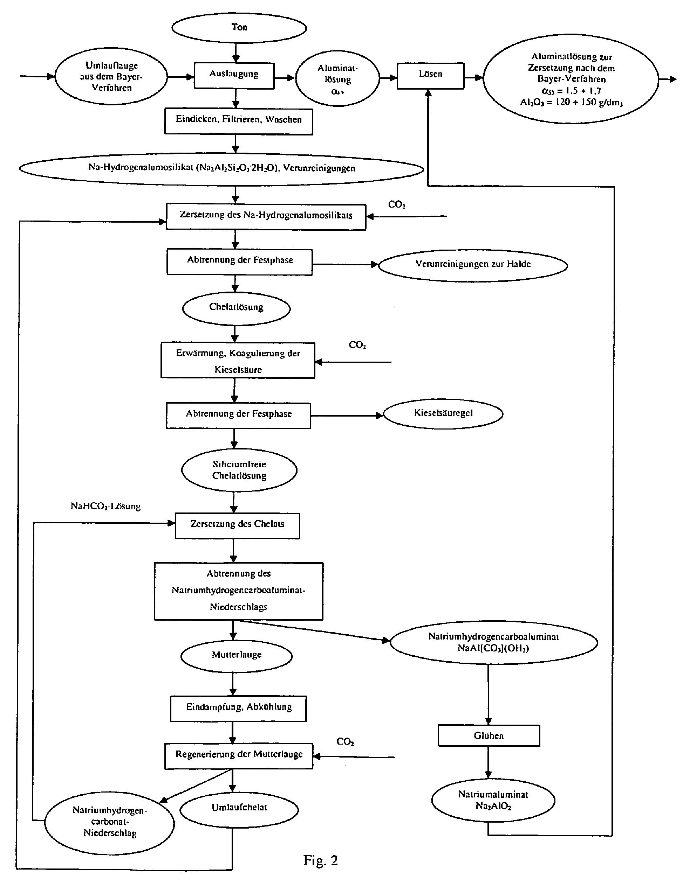

### Beispiel 2: Alkalische hydrochemische Verarbeitung von Ton zu Tonerde (s. Fig. 2).

Eine Toncharge mit der Zusammensetzung Na₂O - 0,25 %, Al₂O₃ - 37,50 %, SiO₂ - 44,80 %, Fe₂O₃ - 1,59 % und TiO₂ - 2,51 % wurde mit einer Lösung der Ätzlauge unter folgenden Bedingungen ausgelaugt:
Konzentration an Na₂O_{ky}: 120 g/dm₃,
Verhältnis Flüssigphase : Festphase: 7:1,
Auslaugungsdauer: 5 Stunden,
Auslaugungstemperatur: 102 °C.

Die während des Auslaugungsprozesses gebildete Festphase wurde abfiltriert und gewaschen. Die chemische Zusammensetzung der Festphase des Auslaugungsproduktes des Tons war folgende: Na₂O - 19,0 %, Al₂O₃ - 29,70 %, SiO₂ - 36,30 %, Fe₂O₃ - 1,50 % und TiO₂ - 2,50 %. Zusammensetzung des Stoffbestands: hauptsächlich Natriumhydrogenalumosilikat (NA₂Al₂·Si₂O₈·2H₂O).

Das Natriumhydrogenalumosilikat wurde unter folgenden Bedingungen zersetzt:
- Umlaufende Chelatlösung:
- Konzentration des Dinatriumsalzes der Ethylendiamintetraessigsäure: 100 g/dm₃,
- Verhältnis Flüssigphase : Festphase: 10 : 1,
- Temperatur: 25 °C,
- CO₂-Druck: 40 bar,
- Zersetzungsdauer: 4 Stunden.

Die Flüssigphase der Reaktionsprodukte wurde vom unlöslichen verunreinigten Niederschlag abgetrennt und unter einem CO₂-Druck von 16 bar bei einer Temperatur von 120 °C während 2 Stunden zur Koagulierung der Kieselsäure gehalten. Das gebildete Kieselsäuregel mit der Zusammensetzung: SiO₂ - 84,60 %, Al₂O₃ - 0,63 %, Na₂O - 1,15 % wurde abfiltriert und die kieselsäurefreie Lösung bei einer Temperatur von 25 °C durch Umsetzung mit einer Natriumhydrogencarbonatlösung in einem Überschuss von 30 %, bezogen auf die Stöchiometrie, zersetzt.

Der ausgefallene Niederschlag aus Natriumhydrogencarboaluminat wurde von der Lösung abfiltriert. Die Zusammensetzung des Niederschlags: Na₂O - 21,40 %, Al₂O₃ - 36,80 %, SiO₂ - 0,81 %. Das Natriumhydrogencarboaluminat wurde bei einer Temperatur von 700 °C während 0,5 Stunden geglüht. Das dabei erhaltene Natriumaluminat hatte folgende Zusammensetzung: Na₂O - 35,80 %, Al₂O₃ - 61,50 %, SiO₂ - 1,40 %.

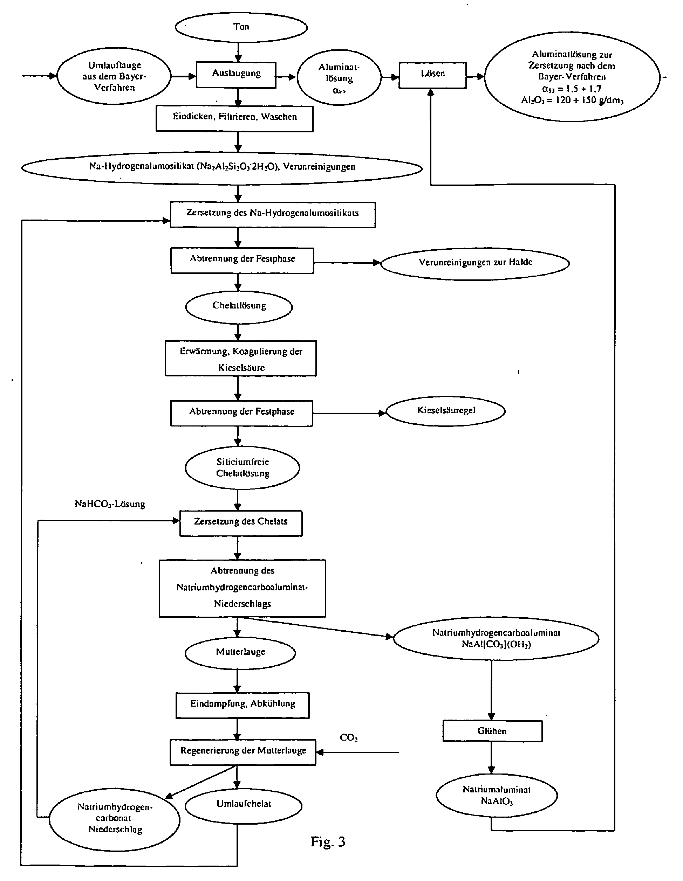

### Beispiel 3: Hydrochemische Verarbeitung von Ton zu Tonerde (s. Fig. 3).

Die Toncharge wurde wie in Beispiel 2 ausgelaugt.

Das Natriumhydrogenalumonat wurde unter folgenden Bedingungen zersetzt:
- Umlaufende Chelatlösung:
- Konzentration des Dinatriumsalzes der Ethylendiamintetraessigsäure 100 g/dm³ und Konzentration der Essigsäure 7 %,
- Temperatur: 25 °C,
- Zersetzungsdauer: 1,5 Stunden.

Die Flüssigphase der Reaktionsprodukte filtrierte man vom unlöslichen verunreinigten Niederschlag ab und hielt sie bei einer Temperatur von 120 °C innerhalb von 2 Stunden zur Koagulierung der Kieselsäure. Das gebildete Kieselsäuregel mit der Zusammensetzung: SiO₂ - 83,50 %, Al₂O₃ -0,50 %, Na₂O - 0,60 %, Fe₂O₃ - 0,05 % wurde abfiltriert, und die siliciumfreie Lösung wurde bei einer Temperatur von 90 °C durch Umsetzung mit Natriumhydrogencarbonat bei einem Überschuss von 30 %, bezogen auf die Stöchiometrie, zersetzt.

Der Niederschlag aus Natriumhydrogencarboaluminat wurde von der Lösung durch Filtration abgetrennt. Zusammensetzung des Niederschlags: Na₂O - 21,30 %, Al₂O₃ - 36,70 %, SiO₂ - 0,51 %.

Das Natriumhydrogencarboaluminat wurde bei einer Temperatur von 700 °C während 0,5 Stunden geglüht. Das dabei erhaltene Natriumaluminat hatte folgende Zusammensetzung: Na₂O - 35,9 %, Al₂O₃ - 62,0 %, SiO₂ - 0,83 %.

## Patentansprüche

1. Verfahren zur kalten hydrochemishen Zersetzung von Natriumhydrogenalumosilikat, **dadurch gekennzeichnet, dass** man Natriumhydrogenalumosilikat bei niedriger Temperatur mit einer umlaufenden Lösung des Chelats in Gegenwart einer schwachen Säure unter Bildung löslicher Verbindungen des Aluminiumchelats, der Kieselsäure und des Natriumsalzes der schwachen Säure zersetzt, die unlöslichen Verunreinigungen von der Lösung abtrennt, der Lösung ein Koagulierungsmittel zusetzt, zur Koagulierung der Kieselsäure auf eine Temperatur von 100 - 120 °C erwärmt, das gebildete Kieselsäuregel von der Lösung abtrennt, die kieselsäurefreie Lösung des Aluminiumchelats durch Umsetzung mit einem Überschuss an Natriumhydrogencarbonat zersetzt, wodurch sich ein Niederschlag aus Natriumhydrogencarboaluminat und eine Mutterlauge bilden, man den Niederschlag aus Natriumhydrogencarboaluminat abtrennt, die Mutterlauge eindampft, abkühlt und durch Karbonisierung mit gasförmigem Kohlendioxid unter einem Druck von mindestens 16 bar unter Bildung eines Niederschlags aus Natriumhydrogencarbonat regeneriert, diesen von der Chelatlösung abtrennt, das Natriumhydrogencarboaluminat bei einer Temperatur von 700 - 900 °C unter Bildung von Natriumaluminat glüht und dieses wieder der Herstellung von Tonerde zuführt.

2. Verfahren nach Anspruch 1, **dadurch gekennzeichnet, dass** als umlaufendes Chelat sowohl Natriumsalze der Ethylendiamintetraessigsäure als auch die Ethylendiamintetraessigsäure selbst verwendet werden.

3. Verfahren nach Anspruch 1, **dadurch gekennzeichnet, dass** die Temperatur der Zersetzung des Natriumhydrogencarboaluminats 20-45 °C beträgt.

4. Verfahren nach Anspruch 1, **dadurch gekennzeichnet, dass** die Zersetzung des Aluminiumchelats durch Umsetzung mit Natriumhydrocarbonat in einem Überschuss von 30 - 100 %, bezogen auf die Stöchiometrie, erfolgt.

5. Verfahren nach Anspruch 1, **dadurch gekennzeichnet, dass** auf den Stufen der Abtrennung der Festphasen aus den Lösungen, d.h. des Kieselsäuregels und des Hydrogencarboaluminats die umlaufende Impfkristalllösung der entsprechenden Komponente verwendet wird.

6. Verfahren nach Anspruch 1, **dadurch gekennzeichnet, dass** die Produkte der Regenerierung der Lösung des Chelats, der schwachen Säure und des Natriumhydrogencarbonats umlaufende Produkte sind.

7. Verfahren nach Anspruch 1, **dadurch gekennzeichnet, dass** das isolierte Kieselsäuregel ein Handelsprodukt ist.

8. Verfahren nach Anspruch 1, **dadurch gekennzeichnet, dass** bei der Zersetzung des Rotschlamms die unlöslichen Verunreinigungen das Eisenerzprodukt darstellen, das für das Erschmelzen von Roheisen zu Titanschlacke geeignet ist.

## Claims

1. Process for the cold hydrochemical decomposition of sodium hydrogen aluminosilicate, **characterised in that** sodium hydrogen aluminosilicate is decomposed at low temperature with a circulating solution of the chelate in the presence of a weak acid to form soluble compounds of the aluminium chelate, of the silicic acid and of the sodium salt of the weak acid, the insoluble contaminants are separated from the solution, a coagulator is added to the solution that is heated to a temperature of 100 - 120 °C in order to coagulate the silicic acid, the resulting silicic acid gel is separated from the solution, the silicic acid-free solution of the aluminium chelate is decomposed by treatment with an excess of sodium hydrogen carbonate whereby a precipitate of sodium hydrogen carboaluminate and a mother liquor are formed, the sodium hydrogen carboaluminate precipitate is separated, the mother liquor is concentrated by evaporation, cooled and regenerated by carbonisation with gaseous carbon dioxide under a pressure of at least 16 bar with the formation of a sodium hydrogen carbonate precipitate, the latter is separated from the chelate solution, the sodium hydrogen carboaluminate is calcined at a temperature of 700 - 900 °C with the formation of sodium aluminate and this is supplied again for the production of alumina.

2. Process according to claim 1, **characterised in that** sodium salts of ethylenediaminetetraacetic acid as well as ethylenediaminetetraacetic acid itself are used as the circulating chelate.

3. Process according to claim 1, **characterised in that** the temperature for the decomposition of the sodium hydrogen carboaluminate is 20 - 45 °C.

4. Process according to claim 1, **characterised in that** the decomposition of the aluminium chelate is effected by treatment with a stoichiometric excess of 30-100 % of sodium hydrogen carbonate.

5. Process according to claim 1, **characterised in that** in regard to the steps for separating the solid phases from the solutions, i.e. the silicic acid gel and the hydrogen carboaluminate, one uses the circulating solution of seed crystals of the corresponding components.

6. Process according to claim 1, **characterised in that** the products for regenerating the solution of the chelate, the weak acid and the sodium hydrogen carbonate are circulating products.

7. Process according to claim 1, **characterised in that** the isolated silicic acid gel is a commercial product.

8. Process according to claim 1, **characterised in that** in the decomposition of the red mud the insoluble contaminants represent the iron ore product that is suitable for smelting pig iron to titanium slag.

## Revendications

1. Procédé de décomposition hydrochimique froide d'aluminosilicate de sodium et hydrogène, **caractérisé par** les étapes consistant à décomposer de d'aluminosilicate de sodium et hydrogène à basse température avec une solution circulante du chélate en présence d'un acide faible avec formation de composés solubles du chélate d'aluminium, de l'acide silicique et du sel de sodium de l'acide faible, séparer les impuretés insolubles de la solution, ajouter un agent de coagulation à la solution, chauffer à une température de 100 à 120 °C jusqu'à coagulation de l'acide silicique, séparer de la solution le gel d'acide silicique formé, décomposer la solution du chélate d'aluminium exempte d'acide silicique par réaction avec un excédent de bicarbonate de sodium, ce qui entraine la formation d'un précipité de carboaluminate de sodium et hydrogène et d'une eau-mère, séparer le précipité à partir du carboaluminate de sodium et hydrogène, concentrer l'eau-mère par évaporation, la refroidir et la régénérer par carbonisation avec du dioxyde de carbone sous forme gazeuse sous une pression d'au moins 16 bars avec formation d'un précipité constitué de bicarbonate de sodium, séparer celui-ci de la solution de chélate, calciner le carboaluminate de sodium et hydrogène à une température de 700 à 900°C avec formation d'un aluminate de sodium et ramener ledit aluminate de sodium dans la production d'alumine.

2. Procédé selon la revendication 1, **caractérisé en ce qu'**on utilise aussi bien des sels de sodium de l'acide éthylènediaminetétraacétique que l'acide éthylènediaminetétraacétique lui-même en tant que chélate circulant.

3. Procédé selon la revendication 1, **caractérisé en ce que** la température de la décomposition du carboaluminate de sodium et hydrogène est comprise entre 20 et 45°C.

4. Procédé selon la revendication 1, **caractérisé en ce que** la décomposition du chélate d'aluminium par réaction avec du bicarbonate de sodium a lieu en un excédent de 30 à 100 %, en fonction de la stoechiométrie.

5. Procédé selon la revendication 1, **caractérisé en ce que**, pendant les étapes consistant à séparer les phases solides issues des solutions, c'est-à-dire le gel d'acide silicique et le carboaluminate d'hydrogène, on utilise la solution circulante de cristal d'inoculation des composants correspondants.

6. Procédé selon la revendication 1, **caractérisé en ce que** les produits de la régénération de la solution du chélate, de l'acide faible et du bicarbonate de sodium sont des produits circulants.

7. Procédé selon la revendication 1, **caractérisé en ce que** le gel d'acide silicique isolé est un produit du commerce.

8. Procédé selon la revendication 1, **caractérisé en ce que**, lors de la décomposition de la boue rouge, les impuretés insolubles représentent le produit formant minerai de fer qui convient pour la fusion de fonte brute pour donner du laitier de titane.
